# EUROPÄISCHE PATENTSCHRIFT

(11) **EP 1 754 640 B1**
(45) Veröffentlichungstag und Bekanntmachung des Hinweises auf die Patenterteilung: **27.07.2011**
(21) Anmeldenummer: 06013547.2
(22) Anmeldetag: 30.06.2006
(51) Int. Cl.: B60T 8/32, B62L 3/08

(54) **Integralbremsanlage mit Antiblockierregelung für ein Motorrad**
Integral braking system with anti-lock control for motorcycles
Système de freinage intégral avec régulation anti-blocage pour motos

(30) Priorität: 20.08.2005 DE 102005039396
(43) Veröffentlichungstag der Anmeldung: 21.02.2007
(73) Patentinhaber: Bayerische Motoren Werke Aktiengesellschaft, 80809 München (DE)
(72) Erfinder: Hamm, Markus, 85737 Ismaning (DE)

(56) Entgegenhaltungen:
- DE-A1- 3 803 563
- DE-A1- 4 330 121
- DE-A1- 10 205 229
- JP-A- 2000 071 963

## Beschreibung

Die vorliegende Erfindung betrifft eine Integralbremsanlage mit Antiblockierregelung für ein Motorrad.

Im Zusammenhang mit Motorrädern versteht man unter dem Begriff "Integralbremsanlage" eine Bremsanlage, bei welcher durch Betätigung eines Bremshebels, insbesondere eines Handbremshebels, gegebenenfalls auch eines Fußbremshebels, gleichzeitig die Vorderradbremse und die Hinterradbremse eines Motorrads ansteuerbar sind. Durch Betätigen eines einzigen Betätigungselementes können also beide Radbremsen angesteuert werden.

In Verbindung mit Integralbremsanlagen ist es bekannt, bei auftretender Blockierneigung am Vorder- und/oder Hinterrad den Bremsdruck an der jeweiligen Bremse durch ein Antiblockierregelsystem (ABS) zu reduzieren.

Insbesondere für Gelände- und/oder Sportmotorräder mit Antiblockierregelsystem ist es zudem bekannt, eine Bedienoption vorzusehen, durch welche die Antiblockierregelung abschaltbar ist. Eine solche Bedienoption ist auch für Motorräder mit Integralbremsanlage bekannt. Die Abschaltung kann beispielsweise vom Fahrer durch die Betätigung eines Tasters auslösbar sein. Diese Bedienoption ist insbesondere geeignet für den Offroad- und/oder Rennstreckenbetrieb, da in einem solchen Betrieb das Blockieren zumindest eines Rads erwünscht sein kann. Der Eingriff eines Antiblockierregelsystems in einem solchen Betrieb kann sogar mit Gefahren verbunden sein.

Der beschriebene Stand der Technik birgt den Nachteil, dass es bei Motorrädern mit Integralbremse und abschaltbarer Antiblockierregelung im abgeschalteten Zustand der Antiblockierregelung in verschiedenen Fahrsituationen zu einem unerwünschten Blockieren des Hinterrades kommen kann. Auch können Fahrsituationen auftreten, in welchen das Hinterrad zwar nicht vollständig blockiert, in welchen aber dennoch eine Blockierneigung des Hinterrads zu instabilen Fahrzuständen führt. Die Ursache für ein unerwünschtes Blockieren des Hinterrades bei Motorrädern mit Integralbremse und ohne bzw. mit deaktivierter Antiblockierregelung der Hinterradbremse liegt in der Regel darin, dass zusätzlich zur Bremskraftverteilung der Integralbremsanlage in bestimmten Fahrsituationen ein Bremsmoment am Hinterrad auftritt. Dieses zusätzliche Bremsmoment kann beispielsweise durch einen Schaltvorgang in einen niedrigeren Gang verursacht werden oder bei steilen Bergabfahrten durch die Bremskraftverteilung der Integralbremse, wenn diese auf den Betrieb auf ebenen Fahrbahnen ausgelegt ist. Ein solches unerwünschtes Blockieren bzw. eine solche Blockierneigung ist mit erheblichen Gefahren nicht nur für den Fahrer des Motorrads verbunden.

Aufgabe der vorliegenden Erfindung ist es, eine sicherheitstechnisch verbesserte Integralbremsanlage mit wahlweise abschaltbarer Antiblockierregelung für ein Motorrad zu schaffen.

Gelöst wird diese Aufgabe erfindungsgemäß durch eine Integralbremsanlage mit Antiblockierregelung für ein Motorrad, welche zumindest ein Bremsbetätigungselement, eine Vorderradbremse und eine Hinterradbremse enthält und bei welcher die Antiblockierregelung wahlweise selektiv für die Vorderradbremse deaktivierbar ist.

Der Fahrer kann das Motorrad somit wahlweise in einen Betriebszustand versetzen, in welchem zwar die Antiblockierregelung der Vorderradbremse deaktiviert ist, das Vorderrad also auf Wunsch zum Blockieren gebracht werden kann, in welchem die Antiblockierregelung der Hinterradbremse aber aktiv ist und somit ein unerwünschtes Blockieren des Hinterrades vermeidbar ist. Durch die Erfindung werden die mit einem solchen unerwünschten Blockieren des Hinterrads verbundenen Gefahren vermieden. Die Sicherheit des Fahrers und ggf. anderer Verkehrsteilnehmer bzw. im Gelände oder auf einer Rennstrecke Anwesender wird erhöht.

Aus der DE 4330121 A1 ist es zwar bekannt, ein Antiblockierregelsystem selektiv für nur eine Radbremse eines Motorrads deaktivierbar auszuführen. Die selektive Deaktivierung der Antiblockierregelung gemäß der DE 4330121 A1 betrifft jedoch, anders als bei der Erfindung, die Hinterradbremse und dient einem ganz anderen Zweck als die Erfindung. Durch die selektive Deaktivierung der Antiblockierregelung der Hinterradbremse gemäß der DE 4330121 A1 wird bezweckt, dass der Fahrer die physikalischen Effekte eines blockierenden Hinterrades ausnutzen kann, während eine Sturzgefährdung aufgrund eines blockierten Vorderrades durch das Antiblockierregelsystem vermieden wird. Die Aufgabe der Erfindung wird dadurch nicht gelöst. Eine erfindungsgemäße Vorrichtung kann jedoch selbstverständlich durch eine selektive Deaktivierbarkeit der Antiblockierregelung der Hinterradbremse gemäß der DE 4330121 A1 erweitert werden. Durch eine solche selektive Deaktivierbarkeit der Antiblockierregelung der Hinterradbremse kann in Verbindung mit der erfindungsgemäßen selektiven Deaktivierbarkeit der Antiblockierregelung der Vorderradbremse die Antiblockierregelung des Motorrads auch vollständig außer Kraft gesetzt werden.

Vorzugsweise ist die Antiblockierregelung des Motorrads alternativ oder zusätzlich wahlweise auf direktem Weg, beispielsweise durch Betätigung eines Schaltelements, vollständig, d. h. für beide Radbremsen (Vorderrad- und Hinterradbremse), abschaltbar. Die fahrdynamischen Effekte einer vollständigen Abschaltung bleiben somit auf Wunsch des Fahrers erhalten.

Vorzugsweise ist die erfindungsgemäße Integralbremsanlage so ausgeführt, dass die selektive Deaktivierung der Antiblockierregelung am Vorderrad ausgehend von einem Vorgängerzustand auslösbar ist, in welchem eine Antiblockierregelung beider Radbremsen aktiv ist. Alternativ oder zusätzliche kann die selektive Deaktivierung der Antiblockierregelung am Vorderrad dadurch erreichbar sein, dass ausgehend von einem Vorgängerzustand, in welchem keine Antiblockierregelung aktiv ist, eine Antiblockierregelung der Hinterradbremse selektiv aktiviert wird.

Die selektive Deaktivierung der Antiblockierregelung der Vorderradbremse ist vom Fahrer willentlich auslösbar. Gemäß einer bevorzugten Ausführungsform der vorliegenden Erfindung ist die selektive Deaktivierung durch die Betätigung eines Schaltelements auslösbar. Alternativ sind andere aus dem Stand der Technik bekannte Arten der Erkennung von Anweisungen des Fahrers bzw. eine automatische Deaktivierung abhängig von einer automatisch durchgeführten Erkennung der aktuellen Fahrsituation denkbar. Vorzugsweise kann nach der selektiven Deaktivierung eine Rückkehr zum aktivierten Zustand durch eine wiederholte, ggf. andersartige, Betätigung desselben Schaltelements erreicht werden.

Vorzugsweise ist das Schaltelement zur Auslösung der erfindungsgemäßen selektiven Deaktivierung als Taster ausgebildet, z. B. in der Gestalt bzw. dem äußeren Erscheinungsbild eines aus dem Stand der Technik bekannten Tasters zur vollständigen Deaktivierung der Antiblockierregelung der Bremsen eines Motorrads.

Optional kann zusätzlich zu dem Schaltelement zur Auslösung der erfindungsgemäßen selektiven Deaktivierung ein weiteres, ggf. ähnlich ausgeführtes, Schaltelement zur vollständigen Deaktivierung vorgesehen sein.

Zusätzlich ist die Antiblockierregelung der Hinterradbremse so ausgeführt dass sie vorübergehend überwindbar ist. Im Gegensatz zu einer dauerhaften Abschaltung ist unter einem Überwinden der Antiblockierregelung hier eine Deaktivierung der Antiblockierregelung zu verstehen, welche nur solange anhält, wie innerhalb eines Bremsvorgangs eine Überstimmungsbedingung erfüllt ist.

Gemäß einer bevorzugten Ausführungsform der vorliegenden Erfindung besteht eine solche Überstimmungsbedingung zum Überwinden der Antiblockierregelung einer Radbremse darin, dass die Radbremse durch eine zusätzlich zur Integralbremsfunktion vorgesehene zweite Bremsfunktion so angesteuert wird, dass der aufgrund der zweiten Bremsfunktion zu erzeugende Bremsdruck größer ist als der bereits über die Integralbremsfunktion eingesteuerte Druck.

Ferner ist eine vorübergehende Überwindung der Antiblockierregelung zumindest einer Radbremse vorzugsweise durch eine bestimmte Art und Weise der Betätigung des zumindest einen Bremsbetätigungselements des Motorrads auslösbar.

Gemäß einer bevorzugten Ausführungsform der vorliegenden Erfindung besitzt das Motorrad zumindest zwei Bremsbetätigungselemente. Ein erstes Bremsbetätigungselement dient zur Ansteuerung der Integralbremsfunktion, ein zweites Bremsbetätigungselement zur Ansteuerung einer zweiten Bremsfunktion, die lediglich die Hinterradbremse betrifft. Die Antiblockierregelung der Hinterradbremse ist gemäß dieser bevorzugten Ausführungsform der vorliegenden Erfindung durch starke Betätigung des zweiten Bremsbetätigungselements vorübergehend überwindbar. Der Fahrer kann somit das Hinterrad auf Wunsch auch dann zum Blockieren bringen, wenn die Antiblockierregelung der Hinterradbremse nicht dauerhaft abgeschaltet ist.

Anhand der einzigen Zeichnung wird die Erfindung im Folgenden weiter erläutert.

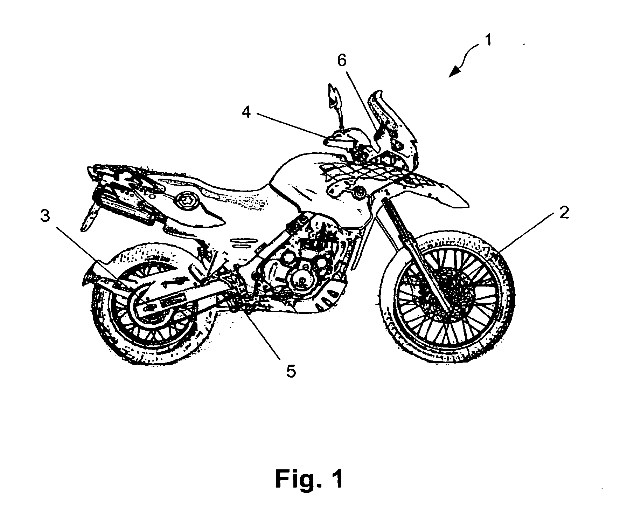

- Fig. 1: zeigt schematisch ein Motorrad mit einer Integralbremsanlage gemäß einer bevorzugten Ausführungsform der Erfindung.

Das in Fig. 1 schematisch dargestellte Motorrad 1 mit Integralbremsanlage, welche eine Vorderradbremse 2 und eine Hinterradbremse 3 enthält, weist einen Handbremshebel 4 und einen Fußbremshebel 5 auf. Der Handbremshebel 4 dient zur Ansteuerung beider Radbremsen, d. h. der Vorderradbremse 2 und der Hinterradbremse 3, durch die Integralbremsfunktion. Der Fußbremshebel 5 dient zur alleinigen Ansteuerung der Hinterradbremse 3.

Die Integralbremsfunktion beinhaltet eine Antiblockierregelung für Vorder- und Hinterrad. Die Ansteuerung der Hinterradbremse 3 in Folge einer Betätigung des Fußbremshebels 5 erfolgt folgendermaßen: Wird der Fußbremshebel 5 so stark betätigt, dass der dementsprechend zu erzeugende Bremsdruck größer ist als der bereits über die Integralbremsfunktion am Hinterrad eingesteuerte Druck ist, so wird die Antiblockierregelung am Hinterrad deaktiviert, solange diese Bedingung vorherrscht.

In einem Ausgangszustand sei die Antiblockierregelung der Integralbremsfunktion sowohl für das Vorderrad als auch für das Hinterrad aktiv.

Durch die Betätigung eines in einem Bedienfeld des Motorrads vorgesehenen Tasters 6 ist die Antiblockierregelung ausschließlich für das Vorderrad deaktivierbar. Die Antiblockierregelung für das Hinterrad bleibt unabhängig von einer Betätigung des Tasters 6 durchgängig aktiv, sofern sie nicht durch eine starke Betätigung des Fußbremshebels 5 überwunden wird.

Der Ausgangszustand wird durch einmalige Betätigung des Tasters 6 verlassen. Die Antiblockierregelung am Vorderrad ist dann deaktiviert, die Antiblockierregelung am Hinterrad ist weiterhin aktiv.

Betätigt der Fahrer in diesem Zustand, d. h. bei selektiv deaktivierter Antiblockierregelung am Vorderrad, ausschließlich den Handbremshebel 4, durch welchen die Integralbremse angesteuert wird, so wird der Bremsdruck am Hinterrad bei Erkennung von Radschlupf durch die Antiblockierregelung der Integralbremsfunktion reduziert. Der von der Integralbremse beaufschlagte Bremsdruck am Hinterrad wird so bei Bedarf bis auf Null abgebaut. Ein Blockieren des Hinterrades kann nicht auftreten.

Betätigt der Fahrer in diesem Zustand hingegen den Fußbremshebel 5 oder beide Bremshebel, so wird der Bremsdruck des hinteren Hauptbremszylinders auch dann an die Hinterradbremse 3 weitergegeben, wenn das Hinterrad blockiert oder zum Blockieren neigt. Die Antiblockierregelung am Hinterrad wird überwunden. So kann der Fahrer das Hinterrad, beispielsweise im Gelände, auf Wunsch zum Blockieren bringen.

Durch die Erfindung wird das Blockieren des Hinterrades auch bei abgeschalteter Antiblockierregelung für das Vorderrad verhinderbar. Ein unerwünschtes Blockieren des Hinterrads und die damit verbundenen Gefahren werden vermieden. Die Erfindung leistet somit einen Beitrag zur Sicherheit im Straßenverkehr bzw. jedem anderen Einsatzort des Motorrads.

Der Fahrer behält durch die Erfindung alle Vorteile einer Integralbremsanlage und besitzt dennoch umfangreiche Handlungsfreiheit.
- Er kann das Motorrad durchgängig mit Vorderrad- und Hinterrad-Antiblockierregelung fahren, indem er den Taster 6 nicht betätigt und ausschließlich den Handbremshebel 4 benutzt.
- Er kann die Vorderrad-Antiblockierregelung dauerhaft deaktivieren und die Hinterrad-Antiblockierregelung beibehalten, indem er den Taster 4 betätigt und ausschließlich den Handbremshebel 4 benutzt.
- Er kann die Vorderrad-Antiblockierregelung beibehalten, indem er den Taster 6 nicht betätigt, und die Hinterrad-Antiblockierregelung überwinden, indem er den Fußbremshebel 5 benutzt.
- Er kann die Vorderrad-Antiblockierregelung dauerhaft deaktivieren, indem er den Taster 6 betätigt, und die Hinterrad-Antiblockierregelung überwinden, indem er den Fußbremshebel 5 benutzt.

## Patentansprüche

1. Integralbremsanlage,
welche ausgeführt ist als Integralbremsanlage eines Motorrads (1),
welche zumindest ein Bremsbetätigungselement (4), eine Vorderradbremse (2) und eine Hinterradbremse (3) enthält und
welche ein Antiblockierregelsystem zur Antiblockierregelung der Vorderradbremse und der Hinterradbremse umfasst,
**dadurch gekennzeichnet,**
**dass** die Antiblockierregelung vom Fahrer willentlich selektiv für die Vorderradbremse deaktivierbar ist und
**dass** die Antiblockierregelung für die Hinterradbremse vorübergehend überwindbar, d.h. deaktivierbar solange innerhalb eines Bremsvorgangs eine Überstimmungsbedingung erfüllt ist, ist.

2. Integralbremsanlage nach Anspruch 1, **dadurch gekennzeichnet,**
**dass** die Antiblockierregelung vom Fahrer wahlweise willentlich für beide Radbremsen deaktivierbar ist.

3. Integralbremsanlage nach Anspruch 2, **dadurch gekennzeichnet,**
**dass** die Antiblockierregelung vom Fahrer wahlweise willentlich für beide Radbremsen dauerhaft abschaltbar ist.

4. Integralbremsanlage nach einem der Ansprüche 1 bis 3, **dadurch gekennzeichnet, dass** die selektive Deaktivierung der Antiblockierregelung für die Vorderradbremse durch die willentliche Betätigung eines Schaltelements (6) durch den Fahrer auslösbar ist.

5. Integralbremsanlage nach Anspruch 4, **dadurch gekennzeichnet,**
**dass** das Schaltelement als Taster ausgebildet ist.

6. Integralbremsanlage nach einem der Ansprüche 1 bis 5, **dadurch gekennzeichnet,**
**dass** die Überstimmungsbedingung zum Überwinden der Antiblockierregelung der Hinterradbremse darin besteht, dass die Hinterradbremse durch eine zusätzlich zur Integralbremsfunktion vorgesehene zweite Bremsfunktion so angesteuert wird, dass der aufgrund der zweiten Bremsfunktion zu erzeugende Bremsdruck größer ist als der über die Integralbremsfunktion eingesteuerte Druck.

7. Integralbremsanlage nach einem der Ansprüche 1 bis 6, **dadurch gekennzeichnet,**
**dass** das Überwinden der Antiblockierregelung durch eine bestimmte Art und Weise der Betätigung des zumindest einen Bremsbetätigungselements auslösbar ist.

8. Integralbremsanlage nach einem der Ansprüche 1 bis 7, **dadurch gekennzeichnet,**
**dass** das Motorrad zumindest zwei Bremsbetätigungselemente besitzt, von welchen ein erstes Bremsbetätigungselement (4) zur Ansteuerung der Integralbremsfunktion dient und ein zweites Bremsbetätigungselement (5) zur Ansteuerung einer zweiten Bremsfunktion, die lediglich die Hinterradbremse betrifft, dient und
**dass** die Antiblockierregelung der Hinterradbremse durch starke Betätigung des zweiten Bremsbetätigungselements vorübergehend überwindbar ist.

## Claims

1. An integral brake system, which is designed as an integral brake system of a motorcycle (1), which contains at least one brake actuating element (4), a front wheel brake (2) and a rear wheel brake (3) and which comprises an anti-lock control system for the anti-lock control of the front wheel brake and the rear wheel brake, **characterised in that** the anti-lock control can be deliberately selectively deactivated for the front wheel brake by the driver and **in that** the anti-lock control for the rear wheel brake can be temporarily overridden, i.e. can be deactivated as long as an overrule condition is fulfilled within a braking operation.

2. An integral brake system according to claim 1, **characterised in that** the anti-lock control can be selectively deliberately deactivated for both wheel brakes by the driver.

3. An integral brake system according to claim 2, **characterised in that** the anti-lock control can be selectively deliberately permanently switched off for both wheel brakes by the driver.

4. An integral brake system according to any one of claims 1 to 3, **characterised in that** the selective deactivation of the anti-lock control for the front wheel brake can be triggered by the deliberate actuation of a switching element (6) by the driver.

5. An integral brake system according to claim 4, **characterised in that** the switching element is configured as a push-button.

6. An integral brake system according to any one of claims 1 to 5, **characterised in that** the overrule condition for overriding the anti-lock control of the rear brake consists in the rear wheel brake being activated by a second brake function provided in addition to the integral brake function in such a way that the brake pressure to be produced because of the second brake function is greater than the pressure introduced by the integral brake function.

7. An integral brake system according to any one of claims 1 to 6, **characterised in that** the overriding of the anti-lock control can be triggered by a specific type and manner of actuation of the at least one brake actuation element.

8. An integral brake system according to any one of claims 1 to 7, **characterised in that** the motorcycle has at least two brake actuation elements, of which a first brake actuation element (4) is used to activate the integral brake function and a second brake actuation element (5) is used to activate a second brake function, which only relates to the rear wheel brake, and **in that** the anti-lock control of the rear wheel brake can be temporarily overridden by heavy actuation of the second brake actuation element.

## Revendications

1. Système de freins intégral,
- réalisé comme système de freins intégral de moto (1),
- comportant au moins un élément d'actionnement de frein (4), un frein de roue avant (2) et un frein de roue arrière (3), et
- un système de régulation antiblocage pour la régulation antiblocage du frein de roue avant et du frein de roue arrière,
système **caractérisé en ce que**
- la régulation antiblocage est neutralisée de manière arbitraire par le conducteur, de façon sélective pour le frein de roue avant, et
- la régulation antiblocage peut être neutralisée provisoirement pour le frein de roue arrière, c'est-à-dire qu'elle peut être neutralisée aussi longtemps que dans une phase de freinage, on se trouve dans un état hyperstatique.

2. Système de freins intégral selon la revendication 1,
**caractérisé en ce que**
la régulation antiblocage peut être neutralisée par le conducteur, sélectivement, à sa demande pour les deux freins de roues.

3. Système de freins intégral selon la revendication 2,
**caractérisé en ce que**
la régulation antiblocage peut être coupée de manière permanente par le conducteur, sélectivement à sa demande pour les deux freins de roues.

4. Système de freins intégral selon l'une des revendications 1 à 3,
**caractérisé en ce que**
la neutralisation sélective de la régulation antiblocage pour le frein de roue avant, est déclenchée par un actionnement intentionnel d'un élément de commutation (6) par le conducteur.

5. Système de freins intégral selon la revendication 4,
**caractérisé en ce que**
l'élément de commutation est un bouton poussoir.

6. Système de freins intégral selon l'une des revendications 1 à 5,
**caractérisé en ce que**
la condition d'hyperstatisticité pour neutraliser la régulation antiblocage du frein de roue arrière consiste à commander le frein de roue arrière par une seconde fonction de frein prévue en plus de la fonction de freinage intégral, pour que sur le fondement de la seconde fonction de freinage, la pression de frein à générer soit supérieure à la pression commandée par la fonction de freinage intégral.

7. Système de freins intégral selon l'une des revendications 1 à 6,
**caractérisé en ce que**
la neutralisation de la régulation antiblocage, est déclenchée par un certain type et un certain mode d'actionnement d'au moins un élément d'actionnement de frein.

8. Système de freins intégral selon l'une des revendications 1 à 7,
**caractérisé en ce que**
la roue comporte au moins deux éléments d'actionnement de freins dont un premier élément d'actionnement de frein (4) sert à commander la fonction de freinage intégral et dont un second élément d'actionnement de frein (5) sert à commander une seconde fonction de freinage concernant uniquement le frein de roue arrière, et
la régulation antiblocage du frein de roue arrière est neutralisée provisoirement par un fort actionnement du second élément d'actionnement de frein.
